# EUROPEAN PATENT APPLICATION

(11) **EP 3 477 683 A1**
(43) Date of publication of application: **01.05.2019**
(21) Application number: 17199168.0
(22) Date of filing: 30.10.2017
(51) Int. Cl.: H01J 49/14, G01N 23/2258

(54) **IMPROVED SIMS SPECTROMETRY TECHNIQUE USING FLUORINE CATALYSIS**

(71) Applicant: FEI Company, Hillsboro, OR 97124-5793 (US)
(72) Inventor: Mulders, Johannes Jacobus Lambertus, 5632 SB Eindhoven (NL)
(74) Representative: Janssen, Francis-Paul

(57) **Abstract**

A method of performing Secondary Ion Mass Spectrometry, comprising:
- Providing a specimen on a specimen holder;
- Using an ion beam to irradiate a region of a surface of said specimen, thereby producing ablated specimen material;
- Collecting ionized constituents of said ablated material in a mass analyzer, and sorting them according to species,
further comprising:
- Providing a catalytic gas proximal said region of the specimen surface during said irradiation, said gas comprising fluorine atoms.
Said catalytic gas may, for example, comprise a gas-phase hydrocarbon in which at least some hydrogen atoms have been substituted by fluorine atoms, e.g. a perfluoroalkane.

## Description

The invention relates to a method of performing Secondary Ion Mass Spectrometry (SIMS), comprising:
- Providing a specimen on a specimen holder;
- Using an ion beam to irradiate a region of a surface of said specimen, thereby producing ablated specimen material;
- Collecting ionized constituents of said ablated material in a mass analyzer, and sorting them according to species.
The invention also relates to a Charged Particle Microscope (CPM) in which such a method can be performed.

Secondary Ion Mass Spectrometry (SIMS) is a technique used to analyze the composition of solid surfaces and thin films by sputtering a surface of a specimen with a (focused) primary ion beam and collecting and analyzing ejected/ablated secondary ions. The mass/charge ratios of these secondary ions are measured with a mass analyzer / mass sorter (such as a sector field mass spectrometer, time-of-flight mass analyzer, quadrupole mass analyzer, *etc*.) to determine the elemental, isotopic, or molecular composition of the surface, typically to a depth of ca. 1 to 2 nm. SIMS can be performed in a dedicated/standalone SIMS apparatus, but it can also be performed *in situ* in a Charged Particle Microscope that has been provided with a SIMS module / mass analyzer. Some more information on SIMS can, for example, be obtained from the following references: https://en.wikipedia.org/wiki/Secondary_ion_mass_spectrometry https://serc.carleton.edu/research_education/geochemsheets/techniques/SIMS.html https://serc.carleton.edu/research_education/geochemsheets/techniques/ToFSIMS.html https://en.wikipedia.org/wiki/Mass_spectrometry

Charged particle microscopy is a well-known and increasingly important technique for imaging microscopic objects, particularly in the form of electron microscopy. Historically, the basic genus of electron microscope has undergone evolution into a number of well-known apparatus species, such as the Transmission Electron Microscope (TEM), Scanning Electron Microscope (SEM), and Scanning Transmission Electron Microscope (STEM), and also into various sub-species, such as so-called "dual-beam" apparatus (e.g. a FIB-SEM), which additionally employ a "machining" Focused Ion Beam (FIB), allowing supportive activities such as ion-beam milling or Ion-Beam-Induced Deposition (IBID), for example. More specifically:
- In a SEM, irradiation of a specimen by a scanning electron beam precipitates emanation of "auxiliary" radiation from the specimen, in the form of secondary electrons, backscattered electrons, X-rays and cathodoluminescence (infrared, visible and/or ultraviolet photons), for example; one or more components of this emanating radiation is/are then detected and used for image accumulation purposes.
- In a TEM, the electron beam used to irradiate the specimen is chosen to be of a high-enough energy to penetrate the specimen (which, to this end, will generally be thinner than in the case of a SEM specimen); the transmitted electrons emanating from the specimen can then be used to create an image. When such a TEM is operated in scanning mode (thus becoming a STEM), the image in question will be accumulated during a scanning motion of the irradiating electron beam.

More information on some of the topics elucidated here can, for example, be gleaned from the following Wikipedia links: http://en.wikipedia.org/wiki/Electron_microscope http://en.wikipedia.org/wiki/Scanning_electron_microscope http://en.wikipedia.org/wiki/Transmission_electron_microscopy http://en.wikipedia.org/wiki/Scanning_transmission_electron_microscopy

As an alternative to the use of electrons as irradiating beam, charged particle microscopy can also be performed using other species of charged particle. In this respect, the phrase "charged particle" should be broadly interpreted as encompassing electrons, positive ions (e.g. Ga or He ions), negative ions (e.g. Oxygen), protons and positrons, for instance. As regards non-electron-based charged particle microscopy, some further information can, for example, be gleaned from references such as the following: https://en.wikipedia.org/wiki/Focused_ion_beam http://en.wikipedia.org/wiki/Scanning_Helium_Ion_Microscope - W.H. Escovitz, T.R. Fox and R. Levi-Setti, Scanning Transmission Ion Microscope with a Field Ion Source, Proc. Nat. Acad. Sci. USA 72(5), pp. 1826-1828 (1975). http://www.ncbi.nlm.nih.gov/pubmed/22472444

It should be noted that, in addition to imaging and performing (localized) surface modification (e.g. milling, etching, deposition, *etc*.), a charged particle microscope may also have other functionalities, such as performing spectroscopy, examining diffractograms, studying ion channeling / ion backscattering (Rutherford Backscattering Spectrometry), *etc.*

In all cases, a Charged Particle Microscope (CPM) will comprise at least the following components:
- A particle source, such as a Schottky electron source or ion source.
- An illuminator, which serves to manipulate a "raw" radiation beam from the source and perform upon it certain operations such as focusing, aberration mitigation, cropping (with a diaphragm), filtering, *etc*., before directing it onto (a selected region of) the specimen. It will generally comprise one or more (charged-particle) lenses, and may comprise other types of (particle-)optical component also. If desired, the illuminator can be provided with a deflector system that can be invoked to cause its exit beam to perform a scanning motion across the specimen being investigated.
- A specimen holder, on which a specimen under investigation can be held and positioned (e.g. tilted, rotated). If desired, this holder can be moved so as to effect scanning motion of the specimen w.r.t. the beam. In general, the specimen holder will be connected to a positioning system / stage. When designed to hold cryogenic specimens, the specimen holder can comprise means for maintaining said specimen at cryogenic temperatures, e.g. using an appropriately connected cryogen vat.
- A detector (for detecting radiation emanating from an irradiated specimen), which may be unitary or compound/distributed in nature, and which can take many different forms, depending on the radiation type being detected. Examples include photodiodes, CMOS detectors, CCD detectors, photovoltaic cells, X-ray detectors (such as Silicon Drift Detectors and Si(Li) detectors), *etc.* In general, a CPM may comprise several different types of detector, selections of which can be invoked in different situations.

In the particular case of a dual-beam microscope, there will be (at least) two sources/illuminators (particle-optical columns), for producing two different species of charged particle. Commonly, an electron column (e.g. arranged vertically) will be used to image a specimen, and an ion column (arranged at an angle to the electron column) can be used to (concurrently) modify (machine/process) and/or image (parts of) the specimen, whereby the specimen holder can be positioned so as to suitably "present" a surface of the specimen to the employed electron/ion beams.

In the case of a transmission-type microscope (such as a (S)TEM, for example), a CPM will specifically comprise:
- An imaging system (imaging particle-optical column), which essentially takes charged particles that are transmitted through a specimen (plane) and directs (focuses) them onto analysis apparatus, such as a detection/imaging device, spectroscopic apparatus (such as an EELS device: EELS = Electron Energy-Loss Spectroscopy), *etc.* As with the illuminator referred to above, the imaging system may also perform other functions, such as aberration mitigation, cropping, filtering, *etc.,* and it will generally comprise one or more charged-particle lenses and/or other types of particle-optical components.

It should be noted that a SEM can be provided with a transmitted electron detector, so that it can be used in a manner similar to a (S)TEM. Such an apparatus/mode is sometimes referred to a Transmissive SEM (TSEM) apparatus/mode.

An issue with SIMS is that its efficiency/sensitivity is dependent upon the ionization yield of the associated milling/ablation process, *i.e.* the number of (charged) ablated ions as a fraction of the total number of (neutral or charged) ablated particles. This ionization yield is generally quite low, with a typical value of the order of about 0.01 - meaning that only ca. 1 % of the ablated/sputtered particles appear as ions. Since only charged ablated particles can be analyzed/counted by a mass analyzer, one can understand why the ionization yield is a major limiting factor in the overall performance of a SIMS system.

It is an object of the invention to address this issue. More specifically, it is an object of the invention to provide a SIMS technique/apparatus with an augmented ionization yield compared to the prior art.

These and other objects are achieved in a method as set forth in the opening paragraph above, characterized by:
- Providing a catalytic gas proximal said region of the specimen surface during said irradiation, said gas comprising fluorine atoms.
It should be explicitly noted that the fluorine atoms referred to here do not have to be free atoms; they will instead generally be bonded to other atoms, and thus be comprised in molecules. As explained below, these fluorine atoms are released from such molecules by interaction between the molecules and ions/electrons that are produced by the reaction of the specimen substrate with the primary/irradiating ion beam.

The basic idea behind the invention is to increase the ionization yield at the ablation region (the ion-irradiated region of the specimen) by provision of an electron-acceptor gas species at/proximal said region. Fluorine (F) has the highest electronegativity of the entire periodic table, thus making fluorine atoms very strong electron acceptors. The inventor has observed that a local supply of F-containing gas close to the ion beam impact point on the specimen will induce the release of fluorine atoms and produce free radicals and excited F atoms that are eager to steal an electron from an ablated neutral particle, thereby turning it into a charged ion and thus increasing the ionization yield. Moreover, the inventor has observed that F-containing molecules do not tend to deposit onto an ion-irradiated specimen - most likely due to the high release of F, which tends to enhance milling at the expense of deposition; for example, although the presence of a gas-phase hydrocarbon with F substituents can tend to decrease the milling speed to some extent (because released carbon has to be milled away), ion-induced deposition has not been observed. In addition, the inventor has observed that the contribution of surface diffusion effects obviates the need for a high-density gas cloud in front of the beam impact point, thus avoiding any significant deterioration in resolution.

As provided by the present invention, an enhanced ionization degree/yield during ion milling dramatically improves analysis sensitivity, and is thus a step toward higher-resolution SIMS. This benefit is achieved independently of the detector or primary ion beam species used. This contrasts, for example, with certain known prior-art approaches that attempt to use specific primary ion beam species - such as oxygen or cesium - to achieve an improved ionization yield, as opposed to the use of a catalytic gas.

In an embodiment of the invention (already alluded to above), the employed catalytic gas comprises a gas-phase hydrocarbon in which at least some hydrogen atoms have been substituted by fluorine atoms. An advantage of such an organic embodiment is that gas-phase hydrocarbons produce a satisfactory vapor pressure at relatively low / customary operating temperatures, allowing a relatively high concentration of fluorine atoms to be administered to the catalysis location e.g. at room temperature or cryogenic temperatures; this would not be possible using F-containing inorganic salts, for example. Since the hydrocarbon merely acts as a carrier for fluorine atoms, not all H atoms in a selected hydrocarbon molecule need necessarily be replaced by F atoms - although, the greater the degree of substitution, the greater will be the associated concentration of F-atoms at the ablation site. Suitable hydrocarbon candidates in this context include the alkanes, alkenes and alkynes, for instance. A specific example of an F-rich molecular family in this regard is the perfluoroalkanes - about which some background information can, for example, be gleaned from the following reference: http://dictionary.sensagent.com/Perfluoroalkane/en-en/

In an embodiment of the invention, the employed catalytic gas comprises C*ₙ*F_{2*n*+2}, with an alkane length n selected to lie in a range 5-15, more preferentially 8-12. Such an embodiment is advantageous in that this sub-family of molecules has been found to have a sticking coefficient that is a good compromise between not too low (so that the residence time on the specimen is sufficient to allow satisfactory reaction with the ions) and not too high (so that the layers do not pile up and become difficult to pump out). However, the skilled artisan will realize that other molecules/molecular groups can alternatively be chosen, depending on the particulars of a given analytic situation.

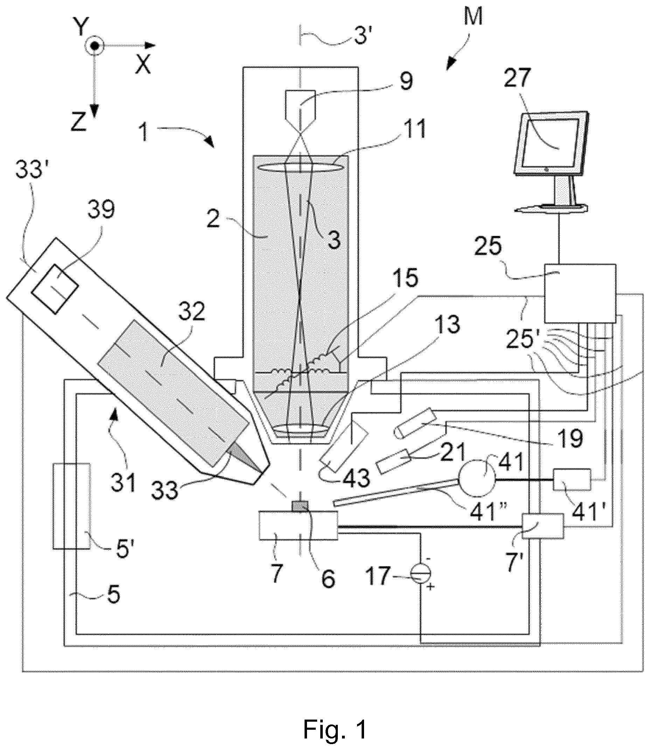

The method of the present invention can be conveniently performed in either a standalone SIMS apparatus or a SIMS module in a CPM, for example. Because the invention is independent of the primary ion beam species used, one can conveniently make use of the Ga or Xe ion beam that is commonly employed in ion-beam microscopy. An example of such *in situ* application in a CPM is given in more detail in Figure 1 / Embodiment 1 below.

The invention will now be elucidated in more detail on the basis of an exemplary embodiment and the accompanying schematic drawing, in which:
Figure 1 renders a longitudinal cross-sectional elevation view of an embodiment of a dual-beam CPM in which the present invention is implemented.

### Embodiment 1

Figure 1 is a highly schematic depiction of an embodiment of a dual-beam charged particle microscope (CPM) in which the present invention is implemented; more specifically, it shows an embodiment of a FIB-SEM. The microscope M comprises a particle-optical column 1, which produces a beam 3 of charged particles (in this case, an electron beam) that propagates along a particle-optical axis 3'. The column 1 is mounted on a vacuum chamber 5, which comprises a specimen holder 7 and associated actuator(s) 7' for holding/positioning a specimen 6. The vacuum chamber 5 is evacuated using vacuum pumps (not depicted). With the aid of voltage supply 17, the specimen holder 7, or at least the specimen 6, may, if desired, be biased (floated) to an electrical potential with respect to ground. Also depicted is a vacuum port 5', which may be opened so as to introduce/remove items (components, specimens) to/from the interior of vacuum chamber 5. A microscope M may comprise a plurality of such ports 5', if desired.

The column 1 (in the present case) comprises an electron source 9 (such as a Schottky gun, for example) and an illuminator 2. This illuminator 2 comprises (*inter alia*) lenses 11, 13 to focus the electron beam 3 onto the specimen 6, and a deflection unit 15 (to perform beam steering / scanning of the beam 3). The microscope M further comprises a controller / computer processing apparatus 25 for controlling *inter alia* the deflection unit 15, lenses 11, 13 and detectors 19, 21, and displaying information gathered from the detectors 19, 21 on a display unit 27.

The detectors 19, 21 are chosen from a variety of possible detector types that can be used to examine different types of "stimulated" radiation emanating from the specimen 6 in response to irradiation by the (impinging) beam 3. In the apparatus depicted here, the following (non-limiting) detector choices have been made:
- Detector 19 is a solid state detector (such as a photodiode) that is used to detect cathodoluminescence emanating from the specimen 6. It could alternatively be an X-ray detector, such as Silicon Drift Detector (SDD) or Silicon Lithium (Si(Li)) detector, for example.
- Detector 21 is an electron detector in the form of a Solid State Photomultiplier (SSPM) or evacuated Photomultiplier Tube (PMT) [*e.g*. Everhart-Thornley detector], for example. This can be used to detect backscattered and/or secondary electrons emanating from the specimen 6.
The skilled artisan will understand that many different types of detector can be chosen in a set-up such as that depicted, including, for example, an annular/segmented detector.

By scanning the beam 3 over the specimen 6, stimulated radiation - comprising, for example, X-rays, infrared/visible/ultraviolet light, secondary electrons (SEs) and/or backscattered electrons (BSEs) - emanates from the specimen 6. Since such stimulated radiation is position-sensitive (due to said scanning motion), the information obtained from the detectors 19, 21 will also be position-dependent. This fact allows (for instance) the signal from detector 21 to be used to produce a BSE image of (part of) the specimen 6, which image is basically a map of said signal as a function of scan-path position on the specimen 6.

The signals from the detectors 19, 21 pass along control lines (buses) 25', are processed by the controller 25, and displayed on display unit 27. Such processing may include operations such as combining, integrating, subtracting, false colouring, edge enhancing, and other processing known to the skilled artisan. In addition, automated recognition processes (e.g. as used for particle analysis) may be included in such processing.

In addition to the electron column 1 described above, the microscope M also comprises an ion-optical column 31. This comprises an ion source 39 and an illuminator 32, and these produce/direct an ion beam 33 along an ion-optical axis 33'. To facilitate easy access to specimen 6 on holder 7, the ion axis 33' is canted relative to the electron axis 3'. As alluded to hereabove, such an ion (FIB) column 31 can, for example, be used to perform processing/machining operations on the specimen 6, such as incising, milling, etching, depositing, *etc.* Alternatively, the ion column 31 can be used to produce imagery of the specimen 6. It should be noted that ion column 31 may be capable of generating various different species of ion at will, e.g. if ion source 39 is embodied as a so-called NAIS source; accordingly, references to ion beam 33 should not necessarily been seen as specifying a particular species in that beam at any given time - in other words, the beam 33 might comprise ion species A for operation A (such as milling) and ion species B for operation B (such as implanting), where species A and B can be selected from a variety of possible options.

Also illustrated is a Gas Injection System (GIS) 41, which can be used to effect localized injection of gases, such as etching or precursor gases, *etc*., for the purposes of performing gas-assisted etching (IBIE) or deposition (IBID), for instance. Such gases can be stored/buffered in a reservoir 41', and can be administered through a narrow nozzle 41", so as to emerge in the vicinity of the intersection of axes 3' and 33', for example.

It should be noted that many refinements and alternatives of such a set-up will be known to the skilled artisan, such as the use of a controlled environment within (a relatively large volume of) the microscope M, e.g. maintaining a background pressure of several mbar (as used in an Environmental SEM or low-pressure SEM).

In the context of the present invention, the microscope M is further provided with a mass analyzer module 43. If ion beam 33 is directed onto a region of specimen 6, it will cause localized ablation of specimen material - some of which will be ionized and some (most) of which will be neutral. Ionized constituents of the ablated specimen material can be captured by mass analyzer module 43, which will sort and count them according to mass/charge ratio - thus giving qualitative/quantitative information regarding the specimen's (localized) constitution. So as to improve the ionization yield of this specimen ablation process, GIS 41 is used by the preset invention to administer a catalytic gas comprising fluorine atoms. As set forth above, the presence of such a fluorine-rich catalytic gas in the vicinity of (the intersection of ion axis 33' with) specimen 6 causes more secondary ions to be produced, *via* a fluorine-based "electron-grabbing" process.

In a specific, non-limiting example, the following parameters can be used:
- Gas species: Perfluoro-dodecane, C₁₀F₂₂
- Gas pressure: 3x10⁻⁵ bar (background pressure in vacuum chamber 5: ca. 2x10⁻⁶ bar).
- Gas temperature: 25°C

## Claims

1. A method of performing Secondary Ion Mass Spectrometry, comprising:
- Providing a specimen on a specimen holder;
- Using an ion beam to irradiate a region of a surface of said specimen, thereby producing ablated specimen material;
- Collecting ionized constituents of said ablated material in a mass analyzer, and sorting them according to species,
**characterized by:**
- Providing a catalytic gas proximal said region of the specimen surface during said irradiation, said gas comprising fluorine atoms.

2. A method according to claim 1, wherein said catalytic gas comprises a gas-phase hydrocarbon in which at least some hydrogen atoms have been substituted by fluorine atoms.

3. A method according to claim 2, wherein, in said hydrocarbon, all hydrogen atoms have been substituted by fluorine atoms.

4. A method according to claim 2 or 3, wherein said hydrocarbon is selected from the group comprising alkanes, alkenes, alkynes and their isomers.

5. A method according to any of claims 1-4, wherein an electron transfer reaction is produced between said specimen material and said catalytic gas, thereby producing a relative increase in ionization yield of said ablated material.

6. A method according to claim 3, wherein said catalytic gas comprises C*ₙ*F_{2*n*+2}, with an alkane length n selected to lie in a range 5-15, more particularly 8-12.

7. A method according to any of claims 1-6, wherein said ion beam comprises ions selected from the group comprising Ga and Xe.

8. A method according to any of claims 1-7, performed *in situ* in a Charged Particle Microscope.

9. A Charged Particle Microscope comprising:
- A specimen holder, for holding a specimen;
- An ion beam column, for irradiating a region of a surface of said specimen with an ion beam, so as to produce ablated specimen material;
- A mass analyzer, for collecting ionized constituents of said ablated material and sorting them according to species;
- A gas injection system, for administering a gas to a vicinity of said region of the specimen surface during said irradiation;
- A controller, for at least partially controlling operation of said microscope,
**characterized in that:**
- Said controller is configured to control said gas injection system so as to administer a catalytic gas comprising fluorine atoms.
